# EUROPEAN PATENT SPECIFICATION

(11) **EP 2 838 343 B1**
(45) Date of publication and mention of the grant of the patent: **26.07.2017**
(21) Application number: 13778013.6
(22) Date of filing: 15.04.2013
(51) Int. Cl.: A01G 23/083, B27B 25/02

(54) **FEED ROLLER ASSEMBLY**
ZUFÜHRROLLENANORDNUNG
ROULEAU D'ALIMENTATION

(30) Priority: 20.04.2012 FI 20120072 U
(43) Date of publication of application: 25.02.2015
(73) Proprietor: Penttimies, Timo, 54410 Ylämaa (FI)
(72) Inventor: Penttimies, Timo, 54410 Ylämaa (FI)
(74) Representative: Helke, Kimmo Kalervo
(86) International application number: PCT/FI2013/050410
(87) International publication number: WO 2013/156677

(56) References cited:
- EP-A2- 0 241 575
- EP-A2- 1 101 581
- FR-A1- 2 760 395
- GB-A- 406 984
- KR-B1- 100 983 419
- SU-A1- 620 370
- US-A- 3 486 543
- US-A1- 2008 128 051
- US-A1- 2010 313 997
- US-A1- 2010 313 997
- US-B1- 6 253 813

## Description

The present invention relates to a feed roller assembly for a harvester head of a forestry machine according to claim 1. In drive and feed devices used in connection with tree processing, sets of feed rollers are required, with the aid of which the tree being processed is moved in the longitudinal direction of the work machine. Supported by the feed rollers, the tree is moved in the longitudinal direction, in such a way that the transfer movement comes from the rotation movement of the feed rollers. At the same time, for example, branches are stripped from a tree in a harvester head. In terms of operation, it is important that the feed roller should move the tree in a centring manner supported by the feed rollers and the grip should be sufficiently strong that sufficient power is available for the moving and stripping of the tree. The construction of the feed roller should be implemented in such a way that it keeps the tree under control laterally and prevents the tree from falling off the drive surface of the feed rollers. This property is required particularly when the same device is used to process trees of different sizes. The toothing of the feed roller should have such a structure that it will give a good grip on the tree, without damaging the tree's surface too deeply. The feed roller and the toothing should grip the tree's surface well and maintain the grip during driving without slipping, to that grooves will not be cut into the surface of the tree if the feed roller slips.

Damage to the feed roller of a harvester, for example, should the feed roller strike a stone, will weakening the grip of the feed roller. Wear of the toothing will also weaken the effectiveness of the feed roller and the harvester grab to feed trees. This is intensified in trees with many branches. Running treetops to a minimum thickness is also reduced considerably. In many harvesters, for reasons of construction the edge area of the feed roller is particularly liable to impacts. The edge area of the feed roller is especially important for ensuring the effective feed of a tree precisely in the area of the treetop, or in trunks with an otherwise thin diameter.

The implementation of the construction of the feed rollers in such a way that the feed roller comprises a cylindrical metal jacket, which is attached to a hub flange, in which there is an attachment surface for the hub of a motor or drive device, is known from Finnish utility model FI 8356. In these feed rollers, the toothing is usually implemented by attaching the toothing to the metal jacket by welding. It is further known to manufacture toothing on top of a cylindrical jacket by attaching rings, in which the toothing varies, to the jacket. Known solutions are to use in feed rollers flexible parts, such as rubber wheels, to the surface of which driving elements are attached. One known construction comprises a metal jacket and a metal frame component, which are attached to each other by a vulcanized rubber tyre.

In the known solutions, see e.g. US 2010/0313997 A1, a problem is the fixed structures, which are difficult in terms of the maintenance of the feed roller. In constructions of the prior art, replacing the toothing demands special expertise and the use of machining and welding machines. In addition, the known feed rollers are constructed in such a way that they are suitable only for a specific application and cannot be adapted in any other way. In addition, the known feed rollers are liable to wear in the toothing.

The present invention is intended to create a feed roller, which is more versatile and easily maintained than the feed rollers of the prior art. The feed roller according to the invention can be assembled in the desired best order possible for the intended use and application. The characteristic features of the present invention are stated in the accompanying Claim 1.

This intention can be achieved by means of a feed roller assembly including at least one attachment flange for attaching the feed roller to an operating device and at least two toothed discs attached to the attachment flange, in which the toothed discs are arranged to act as gripping surfaces against the tree. The feed roller further includes spacer pieces between the attachment flange and the toothed discs and attachment means for combining the attachment flange, the toothed discs, and the spacer pieces to form a feed roller. The damaged part area of a feed roller can be easily replaced with a new one, thanks to the attachment means that hold the feed roller together. It is also possible to move the damaged part of the feed roller, preferably the toothed disc, to a less important area in terms of the feed of the tree, as the toothed discs and attachment flange are attached to each other detachably. It is possible to assemble the feed roller to be of a desired width, by placing a specific number of toothed discs in the feed roller and using spacer pieces of the desired width. The placing of the feed roller in the hub of the operating device can be set according to where the attachment flange is located in the feed roller. In this connection, it should be understood that some of the toothed discs can be attached to the attachment flange by means of other toothed discs, i.e. the attachment flange can also be outermost, the toothed discs being attached to only one side of it.

The toothed discs, the attachment flange, and the spacer pieces are preferably arranged to be attached to each other alternately, so that there is always an spacer pieces between the toothed discs and the attachment flange. The exemplary arrangement can be the following: toothed disc-spacer piece-attachment flange-spacer piece-toothed disc-spacer piece-toothed disc. Locking means, which secure the parts to each other, run through all the parts.

The assembly preferably further includes a cleaning means for cleaning the gaps between the attachment flange and the toothed discs. In traditional feed rollers, the feed roller remaining clean depends on conditions, the species of tree, and other similar factors. Blocking of the gaps between the toothed discs, and the consequent weakening of the operation of the toothing, can be prevented with the aid of the cleaning means.

The feed roller can include 3 - 9 toothed discs, preferably 3 - 6 toothed discs. The use of a sufficient number of toothed discs will reduce the surface pressure of individual toothed discs reduced and improve the grip on the tree.

The attachment flange can include a guide hole for aligning the attachment flange and the toothed discs relative to each other, with the aid of the spacer pieces. The guide hole facilitates the assembly of the feed roller and thus also accelerates maintenance operations.

According to one embodiment, there are 6 - 12 guide holes, preferably 8 - 10 guide holes in each toothed disc. With the aid of the guide holes, the structure of the feed roller is made extremely rugged.

A hub hole and attachment holes can be machined in the attachment flange for attaching the feed roller to the operating device. In the harvester grabs on the market, there are feed rollers of different sizes, of which many have the same size of diameter, but are usually of different widths. In the present invention, the same modular toothed discs can be used in many feed rollers. The attachment of the feed roller to the operating device rotating the feed roller, for example a hydraulic motor, varies motor-specifically. By altering the hub hole, it is easy to manufacture different attachment flanges to suit many different types of operating device.

In this particular invention, the attachment flange of the feed roller can also be exploited by equipping it with the same toothing as the other toothed discs. The attachment flange can also differ only in the attachment-plate bolted joints designed for this purpose.

In the toothed disc, there can be an opening in the centre for fitting the hub belonging to the operating device partly through the toothed disc. This opening permits the attachment flange to be in the middle of the toothed discs.

In the assembly of the feed roller, the toothed discs can be placed asymmetrically on both sides of the attachment flange. This will permit the feed roller to be adapted to better suit its purpose.

Alternatively, it can be possible to place the toothed discs in the assembly of the feed roller symmetrically on both sides of the attachment flange. The construction assembled from the feed roller's toothed discs, attachment flange, and spacer pieces permits various types of variation.

The stepping of the toothing of adjacent toothed discs can also differ from that of each other, in which case considerably less bark will adhere between the toothed discs, as the toothed discs will not pull the bark along with them. The stepping of the toothing can be affected by altering the number of guide holes of the toothed disc and the number of teeth of the toothing used in the toothed disc. Generally, for example, there are 36 teeth when using eight guide holes in the toothing, 40 teeth when using nine guide holes, and 44 teeth when using ten guide holes. In this way, the stepping can be altered without needing to manufacture two different types of toothed discs.

According to one embodiment, the attachment flange and toothed discs are manufactured from a steel alloy, which is heat treated to improve wear resistance and strength, which steel is alloyed from the following materials: Cr, Ni, Mo, C, Mn. Components manufactured from steel of this kind are extremely wear resistant and their strength can be exploited to the full with the aid of laser cutting.

According to one embodiment, the components are manufactured form conventional steel, the wearing parts of which are tempered later. By using such a construction manufacturing costs can be saved.

The toothed discs are preferably manufactured by laser cutting from a steel, which has a strength of at least 1200 N/mm², preferably at least 1500 N/mm². In terms of manufacturing technique, the construction according to the invention allows the attachment flange and toothed discs to be made from an extremely strong material, preferably highly-alloyed steel, which is heat treated for wear and impact resistance. In addition, after laser cutting, the cut surface oxidizes to become even harder. The sheet, from which the toothed discs are cut, can be selected with the material and thickness that best suitable the purpose in question, as laser cutting does not substantially soften the material, nor does it have limitations relative to the hardness of the material in the same way as welding. The shape of the toothing of the toothed disc can also be formed to support the tree better, for example, by using a laser-cutting device with a cutting head that can be tilted.

According to one embodiment, the spacer pieces are sleeves, in which a shoulder is machined. With the aid of the shoulders, the sleeves remain firmly in place and stiffen the structure. The spacer pieces receive the support forces assisted by the attachment means. By altering the length of the sleeves, the protrusion of the feed rollers from the attachment hub of the drive motors can be set to a suitable distance. The length of the sleeves can be varied and in this way the width of the feed roller can also be adjusted to suit the purpose at the time. The width of the feed roller is also affect by the number and thickness of the toothed discs and attachment flanges.

The construction of the spacer pieces can vary. In addition to the components with shoulders that are turned on a lathe, spacer pieces can also be made without a shoulder (for example, a cut length of a material tube). This is extremely simple and cheap to manufacture and can be made with lower material costs using a thinner material. The aforementioned structure achieves the advantage of a cheaper construction.

The spacer piece can also be a ring equipped with large protrusions, which are fitted into holes machined in the toothed discs.

According to another embodiment, the spacer pieces are discs, in which there are shoulders. Shoulders can be made in the disc, which align the spacer pieces relative to the toothed discs. With the aid of the disc it is possible to achieve a very rugged and stiff structure.

According to one embodiment, a toothed disc, to which are attached studding or widening parts for preventing a tree from falling off the feed roller, is attached to the sides of the feed roller. This will ensure that the feed roller will be given good mass handling properties, as the studding keeps the trees effectively between the feed rollers. The widenings can be like those known from the prior art, for example, transfer studs or similar.

The attachment means can be attachment screws and their counter-nuts. Such an attachment is cheap and easy to implement. In this way, the toothed discs of the feed roller can also be easily rotated to different positions, in order to minimize the drawbacks caused to the toothed discs of the feed roller by damage to a large, extensive area. With the aid of the attachment screws and counter-nuts, conventional welded structures can be easily attached to the feed roller, in order to achieve the desired properties in the feed roller. For example, it is possible to refer to the installation of so-called finger structures for improving the mass-handling properties of the feed roller.

The cleaning means are preferably attached to the original attachment points of the harvester head. The attachment can then be implemented simply and reliably.

According to one embodiment, the assembly further includes a feed-roller guard, to which the cleaning means are attached. In this case, the attachment of the cleaning means can be implemented without separate support structures. The cleaning means can also be attached to a separate support structure.

The cleaning means are preferably a cleaning comb. In the invention, the feed roller is preferably equipped with a cleaning comb, which will always keep the feed roller clean in all conditions. Thus, the feed properties of the tree do not diminish. The cleaning comb can be manufactured by welding or by machining. An adjustable comb structure is also possible, in which, for example, the depth of the cleaning comb can be adjusted. The adjustment can take place, for example, by means of adjustment plates to be installed between the feed-roller guard and the cleaning comb.

The toothing preferably includes individual teeth, in each of which tooth there is a spike for gripping a tree and a shoulder for limiting the bite of the spike. Feeding a tree in a grab demands that the feed roller grips the tree firmly, but at the same time does not cause excessively deep or extensive damage in the tree. In traditional feed-roller constructions, the bite of the spike into the tree depends on many factors, such as the gripping pressure used in the feed rollers, or the hardness of the tree. Control of the bite is thus difficult. In this feed-roller construction, the bite is controlled with the aid of shoulders in the base of the spike. The width of the shoulder can vary according to the biting-prevention requirement at the time. The length of the spike too in the manner required by the intended use can also be easily controlled, thanks to the flexible laser-cutting method. The number of spikes too, which also affects the grip and bite into the tree, can be altered easily. During manufacture, the length of the spike can be easily adjusted to suit the requirements in each case by altering the location of the biting-prevention shoulder in the radial direction of the feed roller.

In the large and few spikes according to the prior art, there is the problem that they easily break the tops of thin trees by turning the tree crosswise when reversing when they strike, for example, a branch of the tree. The spikes of the feed roller assembly according to the invention are small in size and many in number, which ensures that the feed roller has good reversing properties, while they do not break the tops by turning them crosswise.

The toothed disc preferably includes toothing, which is symmetrical independently of the direction of rotation of the toothed disc. If required, the construction of the symmetrical spike can also be altered by changing the shape or angle of the spike, for example, to grip more firmly when feeding forwards and to grip less firmly when reversing the tree.

The spikes of the tooth are also easy to sharpen. In the various areas of the feed roller, various combinations of material thicknesses, or number of spikes, or shapes can be installed, in order to achieve the necessary properties. By altering the number of spikes in the toothed disc, the stepping in adjacent toothed discs can be altered as desired. It is also possible to use even stepping, or if desired, for example, half stepping, or other stepping. When using half stepping, the spikes will detach from the tree at different times when the feed roller rotates, so that less bark will adhere to the feed roller.

In order to reduce the weight of the feed roller, it is also possible to manufacture the spacer pieces from aluminium.

According to one embodiment, it is also possible, in terms of construction, to used toothed discs of different size in the same feed roller. In this way, it is possible to control effectively the direction of the forces acting on the tree. The shape of the spike of the tooth can vary considerably, because a precise trace can be obtained by means of laser cutting. The sharp spikes of the feed roller assembly according to the invention grip the surface of the tree with a low surface pressure and only bite to the desired depth, thanks to the shoulders of the teeth. With the aid of the sharp spike and the bite-limiting shoulder, toothing is created, which permits an effective grip under all circumstances. The use of a low surface pressure also reducing so-called 'diving' when handling twisty trees.

The spike can also have an uneven surface, equipped with small notches. The effect of the feeding power of the tree in lifting the spike to the surface will then decrease and the gripping pressure can be lower. Water cutting may also be possible, but in terms of manufacturing costs this is a considerably more expensive alternative than laser cutting. Water cutting has the advantage that the material does not heat up, and thus does not soften.

According to one embodiment, the toothed discs can be manufactured from several parts. If the toothed disc is damaged, it will then be possible to replace only the damaged part of the toothed disc.

The idea of the invention is to use a feed-roller construction assembled from separate toothed discs with the aid of spacer pieces, in the construction of the feed roller. With the aid of the invention, considerable advantages are obtained, in terms of the operation and maintenance of the feed roller. The feed roller can be assembled symmetrically or asymmetrically, depending of the location of the attachment flange in the centre or to one or other side of the centre line. The feed roller, which is assembled by means of screw joints, can be easily serviced. A new toothed disc can be used to replace one that is worn or damaged. During servicing, the places of the toothed discs can be changed, for example, so that the toothed discs at the edges, which are the most worn and knocked/blunted, are moved to the middle. This is made possible by the construction of the feed roller, which is assembled by screw joints and can be dismantled. The toothed discs can also be easily serviced once they have been detached. In addition, the construction of the feed roller assembly according to the invention permits the feed roller to be easily adapted according to its intended purpose. The feed roller of the assembly according to the invention is also lightly constructed, which facilitates the control of the feed rollers. In addition, the weight advantage that is achieved increases, if the harvester head is suspended at the end of a lifting boom.

In the following, the invention is described in detail with reference to the accompanying drawings showing some embodiments of the invention, in which
- Figure 1: shows a side view of the feed roller assembly according to the invention,
- Figure 2: shows an exploded view of the construction of the feed roller assembly according to the invention,
- Figure 3: shows the construction of the attachment flange of the feed roller assembly according to the invention,
- Figure 4: shows the construction of the toothed disc of the feed roller assembly according to the invention, and
- Figure 5: shows the attachment of the toothed disc and attachment flange of the feed roller assembly according to the invention, seen parallel the longitudinal axis of the feed roller.

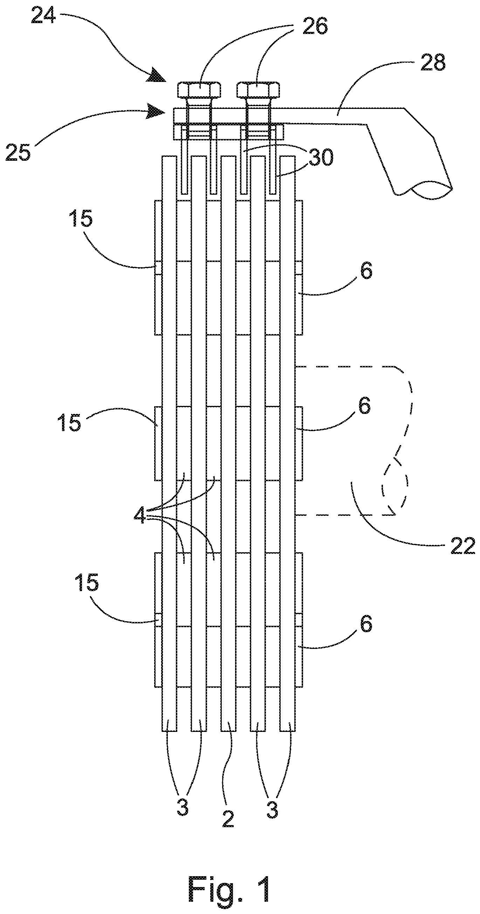

Figure 1 shows the construction of the feed roller 1 according to the invention, which comprises one or several attachment flanges 2 and one or several toothed discs 3. The toothed discs 3 are attached to the attachment flange 2 using spacer pieces 4 and attachment means 17, i.e. in this case attachment screws 15 and counter-nuts 6, as the joining elements. In this connection, it should be understood that at least one toothed disc 3 is attached to the attachment flange 2, to which said toothed disc 3 the other toothed discs 3 can be attached. The toothed discs 3 are attached to the attachment flange 2 of the feed roller 1 in such a way that a feed roller 1 is assembled, in which there are toothed discs 3 relative to the attachment flange 2 in such a way that the feed roller 1 is located correctly to the power-transmission shaft, or the hub 22 of the operating device.

According to Figure 1, the assembly can also include cleaning means 24 for cleaning tree bark from the gaps between the toothed discs 3 and the attachment flange 2. Because the toothed discs 3 and the attachment flange 2 are arranged with a small gap between them with the aid of the spacer pieces 4, space remains between the adjacent toothed discs 3 and the toothed disc 3 and attachment flange 2. When using the feed roller to move a tree, the toothing of the toothed discs bites into the tree, when the bark of the tree enters this aforementioned space. Bark remaining in this space can finally become packed against the surface of the spacer pieces, preventing the toothing 7 from biting effectively into the bark of the tree. According to Figure 1, the cleaning means 24 are preferably a cleaning comb 25, which includes individual comb flanges 30. The comb flanges are shaped in such a way as to conform in shape to the annular path of the spacer pieces when the feed roller rotates. In other words, viewed parallel to the rotational axis of the feed roller, the surface of the comb flanges closest to the spacer pieces of the feed roller is the same shape as the line of rotation of the feed roller. Thus, the comb flanges are the same distance from the surface of the spacer pieces over the entire length of the comb flange.

The cleaning comb 25 is preferably attached to the feed-roller guard 28, which is generally always a permanent component of the feed roller. The guard 28 is intended to protect the feed roller from impacts. The cleaning comb 25 can be attached with the aid of bolts 26, which at the same time attach the comb flanges 30 to the guard 28. The comb flanges 30 act like the teeth of a comb between the toothed discs 3, which by remaining stationary remove tree bark and other rubbish that has adhered between the rotating toothed discs. Figure 1 uses broken lines to show the hub 22 of the operating device.

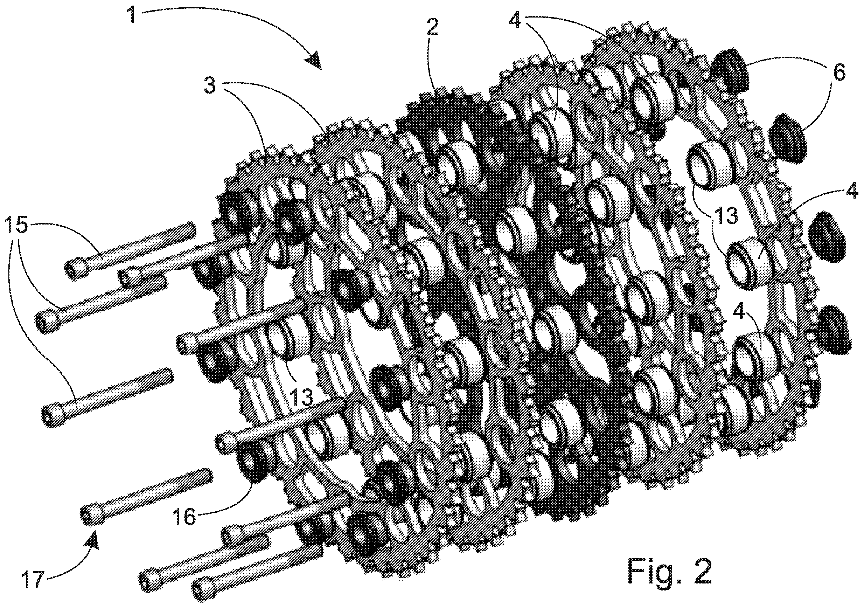

Figure 2 shows an axonometric exploded view of the assembly of the attachment flange 2, the toothed discs 3, and the spacer pieces 4 of the feed roller 1, to form a unified structure with the aid of attachment screws 15, support sleeves 16, and counter-nuts 6. According to the figure, the attachment flange 2, the toothed discs 3, and the spacer pieces 4 together form a pack of toothed discs, which is the feed roller 1. The spacer pieces 4 are attached with the aid of the toothed discs 3 and the shoulders 13 of the attachment flange, which prevent the spacer pieces moving in the direction of the plane of an individual toothed disc.

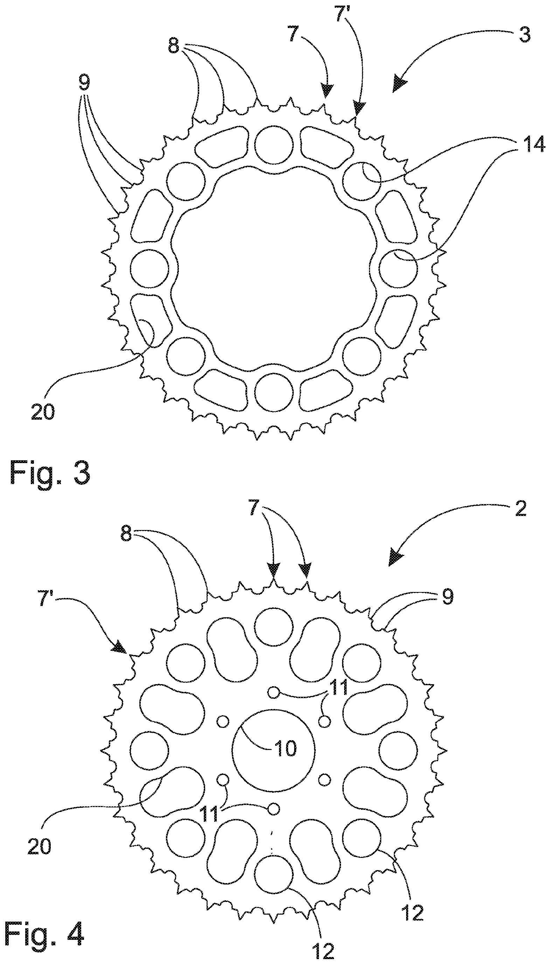

According to Figure 3, toothing 7, which is formed of individual teeth 7', is preferably formed in the attachment flange 2 of the feed roller 1 of the assembly according to the invention. In order to create a good grip, sharp spike 8 and a widened tooth shoulder 9 are shaped in each individual tooth 7'. The spike can also be referred to as a point and the shoulder of the tooth as the base part of the tooth. A hub hole 10 and attachment holes 11 are made in the attachment flange 2, according to the hub of the drive shaft or motor. In addition, the attachment flange 2 can include guide holes 12 arranged in the shoulders 13 of the spacer pieces 4.

According to Figure 4, the feed roller includes one or several toothed discs 3, which are attached to the attachment flange with the aid of spacer pieces 4, in such a way that the shoulder 13 of the spacer piece 4 is located in the guide holes 14 of the toothed discs 3. In the toothed discs 3, there can be the same kind of toothing 7 as in the attachment flange 2. An opening 19 is made in the middle of the toothed disc 3, which is dimensioned in such a way that the hub of the drive device fits inside the opening 19. According to Figures 3 and 4, both the disc 3 and the attachment flange 2 can include lightening openings 20.

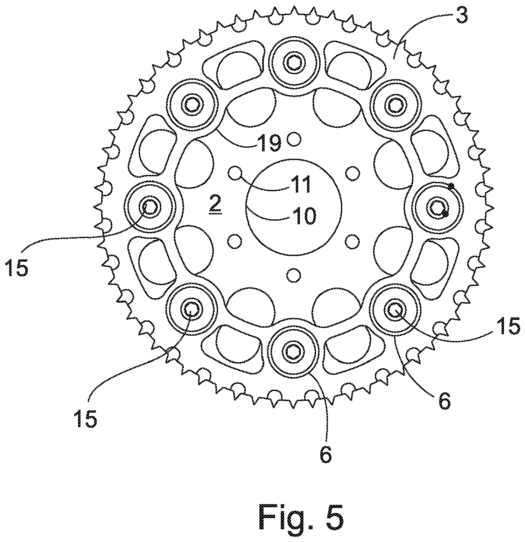

Figure 5 shows in greater detail the attachment of the toothed disc 3 and the attachment flange 2 to each other, parallel to the axis of rotation of the feed roller. The hub of the operating device is attached to the attachment flange 2 with the aid of attachment holes 11. According to the figure, the opening 19 in the toothed disc 3 permits the hub of the operating device to pass through the toothed disc. According to Figure 5, the attachment flange 2 too can include toothing, which is preferably stepped differently relative to the toothed disc, in order to improve grip. Alternatively, the attachment flange can also be made without toothing.

The properties of one feeder roller assembly according to the invention are itemized as follows:
- Manufacture of the toothed discs and/or the attachment flanges takes place by laser cutting, the material being Hardox 600, sheet thickness 10 mm. Hardox 600 is the very strong steel of the Swedish company SSAB, which has a yield strength of 1650 - 2000 N/mm² (conventional structural steel 335 - 520 N/mm²), 8.8 bolt is 880 N/mm². Laser cutting does not substantially soften the structure in the same way as welding does and is suitable even with the hardness of the material Hardox 600.
- Spacer pieces are manufactured automatically by machining, the material being steel or a special-strength aluminium.
- The spacer pieces receive the structural forces, the bolts holding the feed roller together.
- Reliable construction, over-dimensioned bolted-joints, 8 - 10 bolts, M14/ strength 12.9.
- By means of the construction, excellent grip is achieved, thanks to the numerous sharp spikes of the toothing.
- Acute spike angle: the feed roller will remain in the tree with a lower pressure.
- The feed rollers also have good reversing properties, due to the symmetrical structure of the toothing.
- Limitation of bite with the aid of the shoulders of the tooth of the toothing prevents the spikes from sinking too deeply into the tree.
- If necessary, a damaged part of a feed roller can easily be changed to a different part of the feed roller, or replaced with a new part.
- New arrangements in the structure can be implemented easily, thanks to the maintenance-friendly bolted construction.
- The cleaning means of the feed roller keep the feed roller always clean, so that its grip is preserved.
- Mass-handling properties have also be shown to be good.
- The final result is a feed roller with good operating properties.

It must be understood that the above description and the related figures are only intended to illustrate the present invention. The details of the construction of the feed roller can vary within the scope of the inventive idea stated in the accompanying Claims.

## Claims

1. Feed roller assembly for a harvester head of a forestry machine, which feed roller (1) assembly includes a feed roller (1) and an operating device driving the feed roller (1), which feed roller (1) includes
- at least one attachment flange (2) for attaching the said feed roller (1) to the said operating device,
**characterized in that** the said feed roller (1) further includes
- at least two toothed discs (3) attached to the said attachment flange (2), which said toothed discs (3) are arranged to act as gripping surfaces against a tree, and
- spacer pieces (4) between the attachment flange (2) and the toothed discs (3), and attachment means (17) for connecting the attachment flange (2), the toothed discs (3), and the spacer pieces (4) to form the feed roller (1).

2. Feed roller assembly according to Claim 1, **characterized in that** the feed roller assembly further includes cleaning means (24), for cleaning the gaps between the attachment flange (2) and the toothed discs (3).

3. Feed roller assembly according to Claim 1 or 2, **characterized in that** the said toothed discs (3) and/or the attachment flange (2) are manufactured by laser cutting from steel, the strength of which is at least 1200 N/mm², preferably at least 1500 N/mm².

4. Feed roller assembly according to any of Claims 1 - 3, **characterized in that** the said toothed disc (3) includes toothing (7), which is symmetrical independently of the direction of rotation of the toothed disc (3).

5. Feed roller assembly according to any of Claims 1 - 4, **characterized in that** in the feed roller assembly the feed roller (1) include 3 - 9 toothed discs (3), preferably 3 - 6 toothed discs (3).

6. Feed roller assembly according to any of Claims 1 - 5, **characterized in that** the attachment flange (2) includes toothing (7), which toothing (7) includes individual teeth (7'), in each of which teeth (7') there is a spike (8) for gripping the tree and a shoulder (9) for limiting the bite of the spike (8).

7. Feed roller assembly according to any of Claims 1 - 6, **characterized in that** the toothed discs (3) can be located in the assembly of the feed roller (1) asymmetrically on each side of an attachment flange (2).

8. Feed roller assembly according to any of Claims 1 - 7, **characterized in that** the attachment flange (2) includes a guide hole (12) for aligning the attachment flange (2) and the toothed discs (3) relative to each other with the aid of the said spacer pieces (4).

9. Feed roller assembly according to any of Claims 1 - 8, **characterized in that** a centre hole (10) and attachment holes (11) are machined in the attachment flange (2), for attaching the feed roller (1) to the operating device.

10. Feed roller assembly according to any of Claims 1 - 9, **characterized in that** the attachment flange (2) and/or the toothed discs (3) are manufactured from an alloyed steel, which is heat treated in order to improve its heat resistance and strength, which steel is alloyed with the following substances: Cr, Ni, Mo, C, Mn.

11. Feed roller assembly according to any of Claims 1 - 10, **characterized in that** the said spacer pieces (4) are sleeves, in which a shoulder (13) is machined.

12. Feed roller assembly according to any of Claims 1 - 10, **characterized in that** the spacer pieces (4) are discs, in which there are shoulders (13).

13. Feed roller assembly according to any of Claims 1 - 12, **characterized in that** a toothed disc (3) is attached to the sides of the feed roller (1), to which studding or widening parts are attached as widenings, in order to prevent the tree from falling off the feed roller (1).

14. Feed roller assembly according to any of Claims 2 or 3 - 13 when dependent on Claim 2, **characterized in that** the said cleaning means (24) are a cleaning comb (25).

15. Feed roller assembly according to any of Claims 2 or 3 - 14 when dependent on Claim 2, **characterized in that** the feed roller assembly further includes a feed-roller (1) guard (28), to which the said cleaning means (24) are attached.

## Patentansprüche

1. Zuführrollenanordnung für einen Harvesterkopf einer Forstmaschine, wobei die Zuführrollenanordnung (1) eine Zuführrolle (1) und eine Betriebsvorrichtung umfasst, welche die Zuführrolle (1) antreibt, wobei die Zuführrolle (1) Folgendes umfasst
- mindestens einen Befestigungsflansch (2) zur Befestigung der genannten Zuführrolle (1) an die genannte Betriebsvorrichtung,
**dadurch gekennzeichnet, dass** die genannte Zuführrolle (1) weiterhin Folgendes umfasst
- mindestens zwei an dem genannten Befestigungsflansch (2) befestigte Zahnscheiben (3), wobei die genannten Zahnscheiben (3) angeordnet sind, um als Greifoberflächen an einem Baum zu wirken, und
- Abstandhalter-Teile (4) zwischen dem Befestigungsflansch (2) und den Zahnscheiben (3), sowie Befestigungsmittel (17) zur Befestigung des Befestigungsflansches (2), der Zahnscheiben (3) und der Abstandhalter-Teile (4), um die Zuführrolle (1) zu bilden.

2. Zuführrollenanordnung nach Anspruch 1, **dadurch gekennzeichnet, dass** die Zuführrollenanordnung ferner eine Reinigungseinrichtung (24) zur Reinigung der Lücken zwischen dem Befestigungsflansch (2) und den Zahnscheiben (3) umfasst.

3. Zuführrollenanordnung nach Anspruch 1 oder 2, **dadurch gekennzeichnet, dass** die genannten Zahnscheiben (3) und/oder der Befestigungsflansch (2) mit einem Laserschneidverfahren aus Stahl gefertigt sind, dessen Festigkeit mindestens 1200 N/mm², vorzugsweise mindestens 1500 N/mm² beträgt.

4. Zuführrollenanordnung nach einem der Ansprüche 1 - 3, **dadurch gekennzeichnet, dass** die genannte Zahnscheibe (3) eine Verzahnung (7) umfasst, welche unabhängig von der Drehrichtung der Zahnscheibe (3) symmetrisch ist.

5. Zuführrollenanordnung nach einem der Ansprüche 1 - 4, **dadurch gekennzeichnet, dass** die Zuführrolle (1) in der Zuführrollenanordnung 3 - 9 Zahnscheiben (3), bevorzugt 3 - 6 Zahnscheiben (3) umfasst.

6. Zuführrollenanordnung nach einem der Ansprüche 1 - 5, **dadurch gekennzeichnet, dass** der Befestigungsflansch (2) eine Verzahnung (7) umfasst, wobei die Verzahnung (7) einzelne Zähne (7') umfasst, wobei jeder der Zähne (7') eine Spitze (8) zum Greifen des Baumes und eine Schulter (9) zur Begrenzung des Griffs der Spitze (8) aufweist.

7. Zuführrollenanordnung nach einem der Ansprüche 1 - 6, **dadurch gekennzeichnet, dass** die Zahnscheiben (3) innerhalb der Zuführrollenanordnung (1) asymmetrisch an jeder Seite des Befestigungsflansches (2) angeordnet werden können.

8. Zuführrollenanordnung nach einem der Ansprüche 1 - 7, **dadurch gekennzeichnet, dass** der Befestigungsflansch (2) ein Führungsloch (12) umfasst, um den Befestigungsflansch (2) und die Zahnscheiben (3) mit Hilfe der genannten Abstandhalter-Teile (4) relativ zu einander auszurichten.

9. Zuführrollenanordnung nach einem der Ansprüche 1 - 8, **dadurch gekennzeichnet, dass** ein Mittenloch (10) und Befestigungslöcher (11) in den Befestigungsflansch (2) eingearbeitet sind, um die Zuführrolle (1) an der Betriebsvorrichtung zu befestigen.

10. Zuführrollenanordnung nach einem der Ansprüche 1 - 9, **dadurch gekennzeichnet, dass** der Befestigungsflansch (2) und/oder die Zahnscheiben (3) aus einer Stahllegierung gefertigt sind, welche behandelt wurde, um ihre Hitzebeständigkeit und Festigkeit zu erhöhen, wobei der Stahl mit den folgenden Substanzen legiert wurde: Cr, Ni, Mo, C, Mn.

11. Zuführrollenanordnung nach einem der Ansprüche 1 - 10, **dadurch gekennzeichnet, dass** die genannten Abstandhalter-Teile (4) Hülsen sind, in welche eine Schulter (13) eingearbeitet ist.

12. Zuführrollenanordnung nach einem der Ansprüche 1 - 10, **dadurch gekennzeichnet, dass** die genannten Abstandhalter-Teile (4) Scheiben sind, welche Schultern (13) aufweisen.

13. Zuführrollenanordnung nach einem der Ansprüche 1 - 12, **dadurch gekennzeichnet, dass** eine Zahnscheibe (3) an den Seiten der Zuführrolle (1) befestigt ist, an welcher Gewindestangenteile oder Verbreiterungsteile als Verbreiterungen befestigt sind, um zu verhindern, dass der Baum von der Zuführrolle (1) herunter fällt.

14. Zuführrollenanordnung nach einem der Ansprüche 2 oder 3 - 13, wenn abhängig von Anspruch 2, **dadurch gekennzeichnet, dass** die genannte Reinigungseinrichtung (24) ein Reinigungskamm (25) ist.

15. Zuführrollenanordnung nach einem der Ansprüche 2 oder 3 - 14, wenn abhängig von Anspruch 2, **dadurch gekennzeichnet, dass** die genannte Zuführrollenanordnung weiterhin eine Schutzeinrichtung (28) der Zuführrolle (1) umfasst, wobei die genannte Reinigungseinrichtung (24) an der Schutzeinrichtung befestigt ist.

## Revendications

1. Ensemble à rouleau d'alimentation pour une tête d'abattage-ébranchage d'une machine forestière, ledit ensemble à rouleau d'alimentation (1) comprenant un rouleau d'alimentation (1) et un dispositif de commande actionnant le rouleau d'alimentation (1), ledit rouleau d'alimentation (1) comprenant
- au moins une bride de fixation (2) permettant de fixer ledit rouleau d'alimentation (1) audit dispositif de commande,
**caractérisé en ce que** ledit rouleau d'alimentation (1) comprend également
- au moins deux disques dentés (3) fixés sur ladite bride de fixation (2), lesdits disques dentés (3) étant conçus pour faire office de surfaces de prise contre un arbre, et
- des pièces d'écartement (4) situées entre la bride de fixation (2) et les disques dentés (3), et un moyen de fixation (17) permettant de raccorder la bride de fixation (2), les disques dentés (3) et les pièces d'écartement (4) pour former le rouleau d'alimentation (1).

2. Ensemble à rouleau d'alimentation selon la revendication 1, **caractérisé en ce que** l'ensemble à rouleau d'alimentation comprend également des moyens de nettoyage (24), pour le nettoyage des espaces entre la bride de fixation (2) et les disques dentés (3).

3. Ensemble à rouleau d'alimentation selon la revendication 1 ou 2, **caractérisé en ce que** lesdits disques dentés (3) et/ou la bride de fixation (2) sont découpés au laser dans de l'acier, dont la résistance est d'au moins 1 200 N/mm², de préférence d'au moins 1 500 N/mm².

4. Ensemble à rouleau d'alimentation selon l'une quelconque des revendications 1 à 3, **caractérisé en ce que** ledit disque denté (3) comprend des dentures (7) symétriques, indépendamment de la direction de rotation du disque denté (3).

5. Ensemble à rouleau d'alimentation selon l'une quelconque des revendications 1 à 4, **caractérisé en ce que**, dans l'ensemble à rouleau d'alimentation, le rouleau d'alimentation (1) comprend 3 à 9 disques dentés (3), de préférence 3 à 6 disques dentés (3).

6. Ensemble à rouleau d'alimentation selon l'une quelconque des revendications 1 à 5, **caractérisé en ce que** la bride de fixation (2) comprend des dentures (7), lesdites dentures (7) comprenant des dents individuelles (7'), chacune desdites dents (7') comprenant une pointe (8) servant de prise avec l'arbre et un épaulement (9) limitant la morsure de la pointe (8).

7. Ensemble à rouleau d'alimentation selon l'une quelconque des revendications 1 à 6, **caractérisé en ce que** les disques dentés (3) peuvent être situés dans l'ensemble à rouleau d'alimentation (1) de manière asymétrique, de chaque côté d'une bride de fixation (2).

8. Ensemble à rouleau d'alimentation selon l'une quelconque des revendications 1 à 7, **caractérisé en ce que** la bride de fixation (2) comprend un avant-trou (12) permettant d'aligner la bride de fixation (2) et les disques dentés (3) les uns par rapport aux autres à l'aide desdites pièces d'écartement (4).

9. Ensemble à rouleau d'alimentation selon l'une quelconque des revendications 1 à 8, **caractérisé en ce qu'**un trou central (10) et des trous de fixation (11) sont usinés dans la bride de fixation (2), permettant de fixer le rouleau d'alimentation (1) au mécanisme de commande.

10. Ensemble à rouleau d'alimentation selon l'une quelconque des revendications 1 à 9, **caractérisé en ce que** la bride de fixation (2) et/ou les disques dentés (3) sont fabriqués en acier allié traité thermiquement afin d'améliorer sa résistance et sa tenue à la chaleur, ledit acier étant allié aux substances suivantes : Cr, Ni, Mo, C, Mn.

11. Ensemble à rouleau d'alimentation selon l'une quelconque des revendications 1 à 10, **caractérisé en ce que** lesdites pièces d'écartement (4) sont des manchons dans lesquels un épaulement (13) est usiné.

12. Ensemble à rouleau d'alimentation selon l'une quelconque des revendications 1 à 10, **caractérisé en ce que** les pièces d'écartement (4) sont des disques dans lesquels se trouvent des épaulements (13).

13. Ensemble à rouleau d'alimentation selon l'une quelconque des revendications 1 à 12, **caractérisé en ce qu'**un disque denté (3) est fixé sur les côtés du rouleau d'alimentation (1), auquel sont fixés des goujons ou des pièces d'élargissement faisant office de dispositifs d'élargissement afin d'empêcher la chute de l'arbre du rouleau d'alimentation (1).

14. Ensemble à rouleau d'alimentation selon l'une quelconque des revendications 2 ou 3 à 13 lorsqu'elle est dépendante de la revendication 2, **caractérisé en ce que** lesdits moyens de nettoyage (24) sont composés d'un peigne de nettoyage (25).

15. Ensemble à rouleau d'alimentation selon l'une quelconque des revendications 2 ou 3 à 14 lorsqu'elle est dépendante de la revendication 2, **caractérisé en ce que** l'ensemble à rouleau d'alimentation comprend également une protection (28) de rouleau d'alimentation (1), auquel lesdits moyens de nettoyage (24) sont fixés.
